(19) Europäisches Patentamt
European Patent Office
Office européen des brevets

(11) Veröffentlichungsnummer: **0 235 774 B1**

(12) **EUROPÄISCHE PATENTSCHRIFT**

(45) Veröffentlichungstag der Patentschrift: **12.02.92**

(21) Anmeldenummer: **87102874.2**

(22) Anmeldetag: **28.02.87**

(51) Int. Cl.⁵: **C11D 1/44**, C11D 1/835, C10M 173/00, B01F 17/00, C11D 3/20

# (54) Flüssige Tensidmischungen.

(30) Priorität: **05.03.86 DE 3607193**

(43) Veröffentlichungstag der Anmeldung:
**09.09.87 Patentblatt 87/37**

(45) Bekanntmachung des Hinweises auf die Patenterteilung:
**12.02.92 Patentblatt 92/07**

(84) Benannte Vertragsstaaten:
**AT BE CH DE ES FR GB IT LI NL SE**

(56) Entgegenhaltungen:
**EP-A- 0 033 111**
**EP-A- 0 054 895**
**EP-A- 0 104 434**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Schmid, Karl Heinz, Dr.**
**Stifterstrasse 10**
**W-4020 Mettmann(DE)**
Erfinder: **Meffert, Alfred, Dr.**
**Marie-Curie-Strasse 10**
**W-4019 Monheim(DE)**
Erfinder: **Lange, Fritz, Dr.**
**Baderweg 82**
**W-4300 Essen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die heute im großen Umfang als nichtionische Tensidkomponenten eingesetzten Alkylphenolethoxylate besitzen ein erheblich besseres Kälteverhalten (tieferer Stockpunkt und Kältetrübungspunkt) als vergleichbare Ethoxylate auf Basis linearer Fettalkohole. Im Bereich der Alkylphenolethoxylate zeichnet sich insbesondere das Nonylphenol-10 EO-Addukt (NP-10) durch so hervorragende anwendungstechnische Eigenschaften aus, daß hier ein universell einsetzbares Tensid für Wasch- und Reinigungsmittel, aber auch ein Emulgator für eine Vielzahl von technischen Anwendungszwecken vorliegt. Darüber hinaus verfügt dieses Tensid über sehr gute entfettende Eigenschaften, sowohl an Metall als auch an textilem Gewebe. Auf Grund dieser günstigen Eigenschaften ist heute NP-10 der mit Abstand mengenmäßig bedeutendste Vertreter aus der Substanzklasse der Alkylphenolethoxylate.

Nachteilig ist, daß die Umweltverträglichkeit dieser Alkylphenolethoxylate Anlaß zu Bedenken gibt, sodaß beträchtliche Bemühungen bestehen, wenigstens anteilig diese technologisch an sich hochwertige Tensidkomponente durch Komponenten mit besserer Umweltverträglichkeit zu ersetzen. Hierfür bieten sich insbesondere alkoxylierte Fettalkohole natürlicher und/oder synthetischen Ursprungs an. Ihr Einsatz bietet jedoch die folgende Schwierigkeit: Etheralkohole der zuletzt genannten Art besitzen die in der Praxis gewünschten Hydrophilierwerte - Trübungspunkt beispielsweise im Bereich von etwa 60 - 65 °C - erst in solchen Ausführungsformen, in denen die Etheralkohole als solche bei Raumtemperatur fest sind. Hier liegt für die Praxis eine entschiedende Einschränkung in dem Versuch des Austausches der Alkylphenol-Addukte gegen gerad- und/oder verzweigtkettige Fettalkoholaddukte.

Die Erfindung geht von der Aufgabe aus, Tensidmischungen auf der Basis von alkoxylierten geradkettigen und/oder verzweigten Alkoholen, insbesondere entsprechenden Fettalkoholen zur Verfügung zu stellen, die noch bei niedrigen Temperaturen,beispielsweise bei Temperaturen bis herunter zu 10 °C flüssig sind und trotzdem eine hohe Tensidleistung zur Verfügung stellen können. Die Erfindung hat sich insbesondere die Aufgabe gestellt, ein Tensidgemisch zu schaffen, daß wenigstens in seinen technologischen wesentlichen Eigenschaften dem Eigenschaftsbild des NP-10 gleicht, ohne jedoch die unerwünschte Alkylphenolstruktur in dieses Gemisch einführen zu müssen. Im Rahmen der erfindungsgemäßen Lehre gelingt es, Tensidgemische zu kombinieren, die in nahezu sämtlichen Eigenschaften dem NP-10 gleichen und gleichwohl ausschließlich auf Basis umweltverträglicher Komponenten aufgebaut sind.

Gegenstand der Erfindung sind dementsprechend bei Raumtemperatur flüssige Tensidmischungen auf Basis von polyalkoxylierten Alkoholen mit hoher Tensidleistung, die dadurch gekennzeichnet sind, daß sie im wesentlichen aus den folgenden Komponenten bestehen - wobei die nachfolgenden Gewichtsangaben sich jeweils auf das Gesamtgemisch der Mischungskomponenten zu (1) - (5) beziehen:

(1) 50 - 84 Gew.-% geradkettige und/oder verzweigte Etheralkohole der allgemeinen Formel I

$$R_1 - O - [PO]_{0-3} - [EO]_{6-8} - H \qquad (I),$$

in der bedeuten:

- $R_1$ einen linearen oder verzweigten Alkylrest mit 9 - 11 C-Atomen,
- PO den Rest des ringgeöffneten Propylenoxids und
- EO den Rest des ringgeöffneten Ethylenoxids;

(2) 10 - 40 Gew.-% geradkettige und/oder verzweigte Etheralkohole der allgemeinen Formel II

$$R_2 - O - [PO]_{0-3} - [EO]_{3-6} - H \qquad (II),$$

in der bedeuten:

- $R_2$ den linearen oder verzweigten Alkylrest einer Fraktion mit überwiegend 12 - 15 C-Atomen,
- PO und EO die unter (1) angegebenen Reste;

(3) 0 - 10 Gew.-% Etherpolyole aus der Umsetzung von Ethylenoxid mit Polyolreaktanten in einem Molverhältnis von Ethylenoxid/Polyolreaktanten im Bereich von 6 - 15 : 1, wobei die Polyolreaktanten ihrerseits hergestellt worden sind durch die Umsetzung von

a) Ethylenglykol, Glycerin, Trimethylolpropan und/oder Neopentylglykol mit

b) $\alpha$-Olefinepoxiden des C-Kettenlängenbereichs von C12-C18 und/oder epoxidiertem Oleyl- bzw. Linoleylalkohol

bei Molverhältnissen von a : b im Bereich von 1 : 1 bis 3 : 1;

(4) 0,1 - 10 Gew.-% substituierte Aminoalkohole aus der Gruppe

A) Alkyl- bzw. Alkylethermono- und/oder -diethanolamine der allgemeinen Formeln III bzw. IV

$$R_3 - [OE]_{0-4} - N(CH_2CH_2OH)_2 \qquad (III)$$

$$R_3 - [OE]_{0-4} - NH-CH_2CH_2OH \qquad (IV),$$

worin bedeuten:

$R_3$ einen linearen oder verzweigten Alkyl- oder Alkenylrest mit 12 - 18 C-Atomen,

OE den Rest des ringgeöffneten Ethylenoxids,

B) das Umsetzungsprodukt von $\alpha$-Olefinepoxiden mit 12 - 18 C-Atomen und Mono- oder Diethanolamin,

C) das Umsetzungsprodukt von epoxidiertem Oleyl-bzw. Linoleylalkohol mit Mono- oder Diethanolamin

und/oder

D) Umsetzungsprodukte der substituierten Aminoalkohole zu A), B) oder C) mit Ethylenoxid in Molverhältnissen von 2 - 12 Mol Ethylenoxid : Mol des substituierten Aminoalkohols;

(5) niedere Caronsäuren in solcher Menge, daß der pH-Wert einer 1 Gew.-%-igen wäßrigen Lösung der Gesamtmischung etwa im Neutralbereich liegt.

Die bervorzugten Mengenbereiche für die Miscungskomponenten zu Ziffern (1) bis (5) sind dabei die folgenden:

Etheralkohole der allgemeinen Formel I: 52 - 65 Gew.-%
Etheralkohole der allgemeinen Formel II: 25 - 35 Gew.-%
Etherpolyole gemäß Ziffer (3): 3 - 7 Gew.-0%
substituierte Aminoalkohole gemäß Ziffer (4) A), Ziffer (4) B) und/oder Ziffer (4) C): 0,1 - 1 Gew.-%
ethoxylierte substituierte Aminoalkohole aus der Gruppe Ziffer (4) D): 3 - 7 Gew.-%
niedere organische Säuren gemäß (5): 0,1 - 3 Gew.-%.

Die hier angegebenen Zahlenwerte für die eingesetzten Gewichtsverhältnisse zeigen das folgende: Die Mitverwendung der Komponente zu (3) ist nicht zwingend, wenngleich ihre Mitverwendung auch bevorzugt ist. Die noch nicht ethoxylierten Aminoalkohole aus der Gruppe (4) A) bis C) werden zweckmäßigerweise nur in kleinen Mengen eingesetzt, während die entsprechenden ethoxylierten Derivate gemäß (4) D) in größeren Mengen - jeweils innerhalb des angegebenen allgemeinen Bereichs - verwendet werden können. Werden substituierte Aminoalkohole aus der Gruppe (4) A) bis C) mitverwendet, so erfolgt dies bevorzugt mit der zusätzlichen Maßgabe, daß dann Polyolverbindungen gemäß (3) und/oder ethoxylierte Aminoalkohole gemäß (4) D) gleichzeitig zum Einsatz kommen.

Die Etheralkohole der allgemeinen Formel II - Mischungskomponente zu (2) - können sich von geradkettigen und/oder verzweigten Alkoholen $R_2OH$ ableiten, in denen der Rest $R_2$ im Bereich von C8 - C18 liegt. Hierbei gilt jedoch, daß wenigstens überwiegend die C12 - C15- Fraktion vertreten ist. Es kann dabei bevorzugt sein, daß wenigstens etwa 75 Gew.-%, insbesondere wenigstens 80 Gew.-% oder auch noch mehr, beispielsweise wenigstens etwa 90 oder 95 Gew.-% der entsprechenden Alkoholfraktion durch den C-Zahlbereich von 12 - 15 repräsentiert sind.

Grundsätzlich gilt für die Mischungskomponenten zu Ziffern (1), (2) und (4), daß sich diese von entsprechenden Alkoholen natürlichen und/oder synthetischen Ursprungs ableiten können. Der erfindungsgemäßen Definition entsprechende Alkoholschnitte stehen als Handelsprodukte sowohl natürlichen wie synthetischen Ursprungs in zahlreichen Ausführungsformen zur Verfügung.

Für die Auswahl der Mischungskomponenten zu (1) und (2) gilt die folgende zusätzliche bevorzugte Angabe: Wenn auch in den durch die allgemeinen Formeln I und II dargestellten Etheralkoholen auf die Mitverwendung von Resten des Propylenoxids vollständig verzichtet werden kann, so ist es doch zweckmäßig, wenigstens anteilsweise solche Reste des Propylenoxids in Komponente (1) und/oder in Komponente (2) mitzuverwenden.

Die niederen Carbonsäuren der Mischungskomponente (5) liegen im erfindungsgemäßen Tensidgemisch als Aminsalze vor. Bevorzugt werden toxikologisch unbedenkliche niedere Carbonsäure eingesetzt, wobei hier besonders Bedeutung der Eissigsäure, der Glykolsäure, der Milchsäure und/oder der Citronensäure zukommt.

Die Erfindung betrifft in einer weiteren Ausführungsform den Ersatz von Nonylphenol-9- bzw. 10 EO durch die erfindungsgemäß definierten Tensidgemische mit ihren Komponenten (1) bis (5). Die Vergleichbarkeit eines breiten Eigenschaftsspektrums von Nonylphenol-10 EO mit den erfindungsgemäßen Tensidmischungen wird im folgenden an Hand der erfindungsgemäßen "Produkt A" gezeigt. Dieses erfindungsgemäße"Produkt A" ist dabei eine Tensidmischung gemäß der folgenden Zusammensetzung:

(1) 58,5 % C10-$PO_{1,1}$-$EO_{6,5}$
(2) 11 % C12/C14(50:50)-$PO_{1,1}$-$EO_{6,5}$
20 % C12/C14(70:30)-$PO_2$-$EO_{5,5}$
(3) 5 % Umsetzungsprodukt von C12/14-α-Olefinepoxid mit Ethylenglykol, an welches 10 Mol EO angelagert sind (in den nachfolgenden Beispielen mit "Produkt 1" bezeichnet)
(4) 5 % Umsetzungsprodukt von C12-α-Olefinepoxid mit Diethanolamin, an welches 10 Mol EO angelagert sind (in den nachfolgenden Beispielen"Product 2")
(5) 0,5 % Milchsäure.

Der Vergleich der Produkteigenschaften wurde dabei nach den folgenden Kriterien geführt:
Stockpunkt (DIN 51 583)
Kältetrübungspunkt (DIN) 51 583)
Tauchnetzvermögen (DIN 53 901)
Bestimmung der Oberflächenspannung (DIN 53 914)
Trübungstemperatur (1 %ig in deionisiertem Wasser) (DIN 53 917)
Bestimmung des Reinigungsvermögens
nach Gardner (Seifen-Öle-Fette-Wachse 108,
Seite 527 (1982))
Bestimmung des Waschvermögens
Prüfung des Emulgiervermögens
a) Paraffinemulsion
b) Mineralölhaltige Emulsion (z.B. für Kühlschmiermittel)
Prüfung auf entfettende Wirkung
a) an Metalloberflächen
b) an Baumwolle.

Beispiel 1

| Vergleichende Untersuchungen | | |
|---|---|---|
| | NP-10 | erfindungsgemäßes Produkt A |
| Kältetrübungspunkt | 8-10 °C | 9-10 °C |
| Stockpunkt | 6 - 8 °C | 6 °C |
| Tauchnetzvermögen | 18 sec. | 18 sec. |
| Oberflächenspannung | 31 mN/m | 27 mN/m |
| Trübungstemperatur<br>1 %ige Lösung in Wasser / pH 7 | 60 - 65 °C | 60 - 65 °C |

Bestimmung des Waschvermögens

Marktübliche Waschmittelrezeptur, in der 4,4 % NP-10 enthalten sind und durch Produkt A ersetzt wurden.

Versuchsbedingungen:
Handelsübliche Waschmaschine,
Wasser: 16 °dH, 1-Laugenverfahren
Flotte: ca. 20 Liter
Dosierung: 6 g Waschpulver/Liter
Temperatur: 60 °C; Gewebe: Baumwolle/Polyester

| Anschmutzung: | NP-10 | Produkt A |
|---|---|---|
| | (Werte = Remissionswerte in %) | |
| Staub/Wollfett | 60 | 60 |
| Staub/ Hautfett | 70 | 68 |
| Mineralöl | 52 | 50 |

| Temperatur: 40 °C; Gewebe: Baumwolle/Polyester | | |
|---|---|---|
| Staub/Wollfett | 46 | 60 |
| Staub/Hautfett | 62 | 61 |
| Mineralöl | 48 | 46 |

Prüfung auf entfettende Wirkung an Metalloberflächen

Die Entfettungswirkung von Produkt A wurde im Vergleich Zu NP-10 bestimmt. Bei dieser Methode werden einseitig polierte V2A-Bleche mit Mineralöl eingefettet und über einen Zeitraum von 10 Minuten in eine 0,1 %ige Tensidlösung eingetaucht. Während dieser Zeit wird die Lösung mit 2 Liter pro Minute umgepumpt. Die entfettende Wirkung wird durch das Auswiegen der Metallplatten vor bzw. nach der Entfettung (nach Trocknen) bestimmt, wobei dann die angegebenen Zahlenwerte zeigen, wieviel Prozent des Fettes durch Einwirkung der Tensidlösung von der Metalloberfläche abgelöst wurde.

Prüfbedingungen:

Wasser: 18 °dH
Flotte: 6 Liter
Temperatur: 20 °C
Umpumpvolumen: 2 Liter/Minute
Tensidkonzentration: 0,1 %
Prüfdauer: 10 Minuten
Mineralöl: "Ellmo SO 40"(R) (Handelsprodukt der Firma Eller Montan, Düsseldorf)

| | Entfettung in % |
|---|---|
| Produkt A | 67 |
| NP-10 | 50 |

Bestimmung des Emulgiervermögens

1. Wasseremulgierbares Kühlschmiermittel

Testrezeptur:

| | |
|---|---|
| 5,0 % | Petrolsulfonat, Calcium-Salz |
| 1,2 % | NP-10 bzw. Produkt A |
| 5,5 % | Borsäure |
| 8,5 % | Fettsäurepolydiethanolamid |
| 3,2 % | Tallölfettsäure 25/30 |
| 1,0 % | Polypropylenglykol mit Molekulargewicht 400 |
| 22,5 % | Mineralöl |
| 35,6 % | Wasser |
| 17,5 % | Diethanolamin |

Eine 5 %ige wäßrige Emulsion dieses Konzentrates ist sowohl mit NP-10 als auch mit Produkt A transparent und feinteilig, wobei Wasser in Härtebereich 5 - 20 °dH verwendet werden kann.

2. Paraffinemulsion

Testrezeptur

| | |
|---|---|
| 12,5 % | Paraffin, dünnflüssig |
| 18,8 % | NP-10 bzw. Produkt A |
| 6,2 % | C16/C18(50:50)-6 EO |
| 62,5 % | Wasser. |

Man erhält sowohl mit NP-10 als auch mit Produkt A eine feinteilige, transparente Mikroemulsion.

Bestimmung des Reinigungsvermögens

Im direkten Vergleich zu NP-10 wurde die Reinigungswirkung der erfindungsgemäßen Tensidmischung gemäß den Qualitätsnormen des Industrieverbandes Putz- und Pflegemittel (IPP) geprüft, wie sie in der Zeitschrift Seifen - Öle - Fette - Wachse, Nr. 108, S. 527 (1982) veröffentlicht wurden.

| Rezeptur A | Rezeptur B |
|---|---|
| 8 % Alkylbenzolsulfonat, Natrium-Salz<br>2 % NP-10 bzw. Tensid<br>3 % Natriumgluconat<br>2 % Cumolsulfonat<br>85 % deionisiertes Wasser | 8 % Kokosalkohol-2 EO-sulfat, Natrium-Salz<br>2 % NP-10 bzw. Tensid<br>3 % Natriumgluconat<br>2 % Cumolsulfonat<br>85 % deionisiertes Wasser |

Diese beiden Rezepturen wurden sowohl unverdünnt als auch in Form ihrer 1 %igen wäßrigen Lösungen geprüft. Daneben wurde auch das reine Tensid im Vergleich zu NP-10 getestet. Die Ergebnisse sind in der nachfolgenden Tabelle 1 zusammengefaßt:

Tabelle 1

| | Rezeptur A | | Rezeptur B | | reines Tensid |
|---|---|---|---|---|---|
| | unverdünnt | 1 %ig | unverdünnt | 1 %ig | 10 %ig in Wasser |
| zu NP-10 z. Vgl.) | 100 | 100 | 100 | 100 | 100 |
| Kokosalkohol + 10 EO (z. Vgl.) | 100 | 90 | 80 | 100 | 70 |
| Tensid "Produkt A" (erfindungsgemäß) | 100 | 100 | 100 | 100 | 100 |

Zahlen bedeuten: Relative Reinigungsergebnisse in %, wobei das Reinigungsvermögen von NP-10 = 100 % ist.

| Verdickungspunkt<br>Konsistenz bei 20 °C<br>Gewichtsteile | Produkt A | HP-10 |
|---|---|---|
| Tensid : Wasser 0° dH | | |
| 90 : 10 | flüssig, klar | flüssig, klar |
| 80 : 20 | flüssig, klar | flüssig, klar |
| 70 : 30 | flüssig, klar | viskose Flüssigkeit |
| 60 : 40 | flüssig, klar | hochviskose Flüssigkeit |
| 50 : 50 | hochviskose Paste | hochviskose Paste |
| 40 : 60 | viskose Flüssigkeit | viskose Paste |
| 30 : 70 | flüssig, klar | flüssig, klar |
| 20 : 80 | flüssig, klar | flüssig, klar |

**Entfettende Waschwirkung (% Restfett) - Textil-Technik**

| | | Produkt A | NP-10 |
|---|---|---|---|
| Petrolether-Extraktion | | | |
| neutral | | 0,25 | 0,5 |
| alkalisch (2 g/l Soda) | | 0,30 | 0,4 |
| ungewaschenes Material | 3,7 | | |

Teppichgarn Nm 1,8/1

Schmälze Mineralöl

**simulierende Kontinue-Wäsche**

| | | | | |
|---|---|---|---|---|
| Bad 1 + 2 | 1 g/l Tensid | 90 Sek. | 50 °C |
| 3 | spülen | 90 Sek. | 35 °C |
| 4 | spülen | 90 Sek. | 20 °C. |

**Schaumvermögen**

Prüfgerät Krantz-Färbeapparat

Tensidkonzentration: 1 g/l Tensid

neutral

Aufheizphase

Flottenzirkulation: Einstellung

**visuelle Beurteilung**

0 = kein Schaumvermögen

100 = intensives Schaumvermögen

| | 30 °C | 60 °C | 90 °C |
|---|---|---|---|
| Produkt A | 90 | 90 | 20 |
| NP-10 | 90 | 90 | 20. |

Die nachfolgenden Beispiele 2 - 5 beschreiben weitere Stoffzusammensetzungen im Sinne der Erfindung. Ihre Austestung ist in der anschließenden Tabelle 2 angegeben.

Beispiel 2

| | |
|---|---|
| 50,0 % | C10-2PO-7EO |
| 49,4 % | C12/C14(70:30)-2PO-5,5EO |
| 5,0 % | Umsetzungsprodukt von C12/C14-α-Olefinepoxid mit Ethylenglykol, an welches 10 Mol EO angelagert sind (Produkt 1) |
| 5,0 % | Produkt 2 |
| 0,6 % | Milchsäure (90 %ig) |

Beispiel 3

| | |
|---|---|
| 79,2 | C10-2PO-7EO |
| 10,0 % | C12/C14(70:30)-2PO-5,5EO |
| 10,0 % | Produkt 2 |
| 0,8 % | Milchsäure (90 %ig) |

Beispiel 4

| | |
|---|---|
| 79,2 % | C10-2PO-7EO |
| 10,0 % | C12/C14(70:30)-2PO-5,5EO |
| 3,0 % | Produkt 1 |
| 7,0 % | C12/C14-Fettamin + 12EO |
| 0,8 % | Milchsäure (90 %ig) |

Beispiel 5

| | |
|---|---|
| 79,4 % | C10 = 2PO-7EO |
| 10,0% | C12/C14(70:30)-2PO-5,5EO |
| 5,0 % | Produkt 1 |
| 5,0 % | C12/C14(70:30)-2EO-N(EO)$_9$-H |
| 0,6 % | Milchsäure (90 %ig). |

Tabelle 2

| Beispiel | Trübungstemperatur (1 %ig, pH 6,8) (DIN 53 914) | Tauchnetzvermögen (DIN 53 901) | Oberflächenspannung (DIN 53 914) |
|---|---|---|---|
| 2 | 63 °C | 17 s | 27,3 mN/m |
| 3 | 69 °C | 19 s | 27,1 mN/m |
| 4 | 70 °C | 18 s | 25,9 mN/m |
| 5 | 70 °C | 18 s | 25,9 mN/m |

Der Stockpunkt bzw. Kältetrübungspunkt all dieser Produkte liegt bei 6 - 7 °C bzw. 9 - 10 °C.

## Patentansprüche

1. Bei Raumtemperatur flüssige Tensidmischungen auf Basis von polyalkoxylierten Alkoholen mit hoher Tensidleistung, dadurch gekennzeichnet, daß sie im wesentlichen aus den folgenden Komponenten bestehen (Gew.-%-Angaben jeweils bezogen auf das Gesamtgemisch der nachfolgenden Komponenten (1) bis (5)):

(1) 50 - 84 Gew.-% geradkettige und/oder verzweigte Etheralkohole der allgemeinen Formel I

$$R_1 - O - [PO]_{0-3} - [EO]_{6-8} - H \quad (I),$$

in der bedeuten:

- $R_1$ einen linearen oder verzweigten Alkylrest mit 9 - 11 C-Atomen,
- PO den Rest des ringgeöffneten Propylenoxids und
- EO den Rest des ringgeöffneten Ethylenoxids;

(2) 10 - 40 Gew.-% geradkettige und/oder verzweigte Etheralkohole der allgemeinen Formel II

$$R_2 - O - [PO]_{0-3} - [EO]_{3-6} - H \quad (II),$$

in der bedeuten:

- $R_2$ den linearen oder verzweigten Alkylrest einer Fraktion mit überwiegend 12 - 15 C-Atomen,
- PO und EO die unter (1) angegebenen Reste;

(3) 0 - 10 Gew.-% Etherpolyole aus der Umsetzung von Ethylenoxid mit Polyolreaktanten in einem Molververhältnis von Ethylenoxid/Polyolreaktanten im Bereich von 6 - 15 : 1, wobei die Polyolreaktanten ihrerseits hergestellt worden sind durch die Umsetzung von

a) Ethylenglykol, Glycerin, Trimethylolpropan und/oder Neopentylglykol mit

b) α-Olefinepoxiden des C-Kettenlängenbereichs von C12-C18 und/oder epoxidiertem Oleyl- bzw. Linoleylalkohol

bei Molverhältnissen von a : b im Bereich von 1 : 1 bis 3 : 1;

(4) 0,1 - 10 Gew.-% substituierte Aminoalkohole aus der Gruppe

A) Alkyl- bzw. Alkylethermono- und/oder -diethanolamine der allgemeinen Formeln III bzw. IV

$$R_3 - [OE]_{0-4} - N(CH_2CH_2OH)_2 \quad (III)$$

$$R_3 - [OE]_{0-4} - NH-CH_2CH_2OH \quad (IV),$$

worin bedeuten:

- $R_3$ einen linearen oder verzweigten Alkyl- oder Alkenylrest mit 12 - 18 C-Atomen,
- OE den Rest des ringgeöffneten Ethylenoxids,

B) das Umsetzungsprodukt von α-Olefinepoxiden mit 12-18 C-Atomen und Mono- oder Diethanolamin,

C) das Umsetzungsprodukt von epoxidiertem Oleyl-bzw. Linoleylalkohol mit Mono- oder Diethanolamin

und/oder

D) Umsetzungsprodukte der substituierten Aminoalkohole zu A), B) oder C) mit Ethylenoxid in Molverhältnissen von 2 - 12 Mol Ethylenoxid : Mol des substituierten Aminoalkohols;

(5) niedere Carbonsäuren in solcher Menge, daß der pH-Wert einer 1 Gew.-%-igen wäßrigen Lösung der Gesamtmischung etwa im Neutralbereich liegt.

**2.** Tensidmischungen nach Anspruch 1, dadurch gekennzeichnet, daß wenigstens eine der Mischungskomponenten zu (1) bis (4) innerhalb der folgenden Mengenbereiche liegt:

1) 52 - 65 Gew.%

2) 25 - 35 Gew.%
3) 3 - 7 Gew.-%
4) A) bis C) 0,1 - 1 Gew.-% sowie
4) D) 3 - 7 Gew.-%

mit der zusätzlichen bevorzugten Maßgabe, daß bei Verwendung von Mischungskomponenten 4) A) bis C) Mischungskomponenten zu (3) und/oder zu (4) D) mitverwendet werden.

**3.** Tensidmischungen nach Ansprüchen 1 und 2,dadurch gekennzeichnet, daß die Mischungskomponente zu (5) in solchen Mengen eingesetzt wird, daß der pH-Wert einer 1 Gew.-%-igen wäßrigen Lösung im Bereich von etwa 6 bis 7,5 liegt, wobei als niedere Carbonsäure entsprechende toxikologisch unbedenkliche Säuren insbesondere Essigsäure, Glycolsäure, Milchsäure und/oder Citronensäure bevorzugt sind.

**4.** Tensidmischungen nach Ansprüchen 1 bis 3,dadurch gekennzeichnet, daß sich die Etheralkohole der allgemeinen Formel II von Alkoholfraktionen des C-Zahlbereichs von 8 bis 18 ableiten, in der die C12-15-Fraktion wenigstens etwa 75 Gew.-% und vorzugsweise wenigstens etwa 80 Gew.% ausmacht, wobei entsprechende Etheralkohole der allgemeinen Formel II besonders bevorzugt sein können, in denen wenigstens 90 Gew.-% des Alkylrestes $R_2$ im Bereich von 12 - 15 C-Atomen liegt.

**5.** Tensidmischungen nach Ansprüchen 1 bis 4,dadurch gekennzeichnet, daß in den Mischungskomponenten zu (1) und/oder zu (2) wenigstens anteilsweise Etheralkohole eingesetzt werden, die Reste des ringgeöffneten Propylenoxids enthalten.

## Claims

**1.** Surfactant mixtures liquid at room temperature based on polyalkoxylated alcohols of high detergent power, characterized in that they consist essentially of the following components (percentages by weight based on the mixture of components (1) to (5) below):

(1) 50 to 84% by weight linear and/or branched ether alcohols corresponding to general formula I

$$R_1 - O - \left[ PO \right]_{0-3} - \left[ EO \right]_{6-8} - H \qquad (I)$$

in which
$R_1$ is a linear or branched alkyl radical containing 9 to 11 C atoms,
PO is the ring-opened propylene oxide residue and
EO is the the ring-opened ethylene oxide residue;
(2) 10 to 40% by weight linear and/or branched ether alcohols corresponding to general formula II

$$R_2 - O - \left[ PO \right]_{0-3} - \left[ EO \right]_{3-6} - H \qquad (I)$$

in which
$R_2$ is the linear or branched alkyl radical of a fraction predominantly containing 12 to 15 C atoms,
PO and EO are as defined in (1);
(3) 0 to 10% by weight ether polyols from the reaction of ethylene oxide with polyol reactants in a molar ratio of ethylene oxide to polyol reactants of 6 - 15 : 1, the polyol reactants in turn having been prepared by reaction of
a) ethylene glycol, glycerol, trimethylol propane and/or neopentyl glycol with
b) $\alpha$-olefin epoxides containing 12 to 18 C atoms and/or epoxidized oleyl or linoleyl alcohol
in molar ratios of a : b of 1 : 1 to 3 : 1;
(4) 0.1 to 10% by weight substituted aminoalcohols from the group consisting of

A) alkyl or alkylether mono- and/or diethanolamines corresponding to general formulae III and IV

$$R_3 - \left[ OE \right]_{0-4} - N(CH_2CH_2OH)_2 \qquad (III)$$

$$R_3 - \left[ OE \right]_{0-4} - NH-CH_2CH_2OH \qquad (IV)$$

in which
$R_3$ is a linear or branched alkyl or alkenyl radical containing 12 to 18 C atoms,
OE is the ring-opened ethylene oxide residue,
B) the reaction product of $\alpha$-olefin epoxides containing 12 to 18 C atoms and mono- or diethanolamine,
C) the reaction product of epoxidized oleyl or linoleyl alcohol with mono- or diethanolamine

and/or

D) reaction products of the substituted aminoalcohols of A), B) or C) with ethylene oxide in molar ratios of 2 to 12 mol ethylene oxide to 1 mol of the substituted aminoalcohol;
(5) lower carboxylic acids in such a quantity that the pH value of a 1% by weight aqueous solution of the mixture as a whole is substantially in the neutral range.

**2.** Surfactant mixtures as claimed in claim 1, characterized in that at least one of the mixture components (1) to (4) is present in the following quantitative ranges:

1) 52 to 65% by weight
2) 25 to 35% by weight
3) 3 to 7% by weight
4) A) to C) 0.1 to 1% by weight and
4) D) 3 to 7% by weight,

with the additional preferred proviso that, where mixture components 4)A) to C) are used, mixture components (3) and/or (4)D) are also present.

**3.** Surfactant mixtures as claimed in claims 1 and 2, characterized in that mixture component (5) is used in such quantities that the pH value of a 1% by weight aqueous solution is in the range from about 6 to 7.5, the lower carboxylic acids preferably being toxicologically safe acids, particularly acetic acid, glycolic acid, lactic acid and/or citric acid.

**4.** Surfactant mixtures as claimed in claims 1 to 3, characterized in that the ether alcohols corresponding to general formula II are derived from $c_{8-18}$ alcohol fractions in which the $c_{12-15}$ fraction makes up at least about 75% by weight and preferably at least about 80% by weight, corresponding ether alcohols of general formula II in which at least 90% by weight of the alkyl radical $R_2$ contains 12 to 15 C atoms being particularly preferred.

**5.** Surfactant mixtures as claimed in claims 1 to 4, characterized in that ether alcohols containing ring-opened propylene oxide residues are at least partly present in mixture components (1) and/or (2).

## Revendications

**1.** Mélanges de tensioactifs à base d'alcools polyalcoxylés à pouvoir tensioactif élevé, qui sont liquides à température ambiante et caractérisés en ce qu'ils sont constituées essentiellement des composants

suivants (les indications de pourcentages en poids se rapportant dans chaque cas à la totalité du mélange des composants suivants (1) à (5)):

(1) 50 à 94 % en poids d'éther-alcools à chaîne droite et/ou ramifiée de la formule générale I

$$R_1 - O - [PO]_{0-3} - [EO]_{6-8} - H \quad (I),$$

dans laquelle,

$R_1$ représente un radical alkyle linéaire ou ramifié comportant 9 à 11 atomes de C,
PO est le radical de l'oxyde de propylène à cycle ouvert et
EO est le radical de l'oxyde d'éthylène à cycle ouvert;

(2) 10 à 40 % en poids d'éther-alcools à chaîne droite et/ou ramifiée de la formule générale II

$$R_2 - O - [PO]_{0-3} - [EO]_{3-6} - H \quad (II),$$

dans laquelle,
$R_2$ représente le radical alkyle linéaire ou ramifié d'une fraction comportant principalement 12 à 15 atomes de C,
PO et EO sont les radicaux indiqués sous (1);

(3) 0 à 10 % en poids d'éther-polyols résultant de la mise en réaction d'oxyde d'éthylène avec des réactifs polyols, le rapport molaire entre l'oxyde d'éthylène et les réactifs polyols se situant dans l'intervalle de 6 à 15:1 et les réactifs polyols étant préparés quant à eux par mise en réaction de:

a) éthylèneglycol, glycérine, triméthylolpropane et/ou néopentylglycol avec
b) des époxydes d'alpha-oléfines dont la plage de longueur de chaîne s'étend de C12 à C18 et/ou avec de l'alcool oléylique ou linoléylique époxydé

sous des rapports molaires de a:b, compris dans l'intervalle de 1:1 à 3:1;

(4) 0,1 à 10 % en poids d'amino-alcools substitués faisant partie du groupe suivant:

A) alkyl- ou alkyléthermono- et/ou -diéthanolamines des formules générales III ou IV

$$R_3 - [OE]_{0-4} - N(CH_2CH_2OH)_2 \quad (III)$$

$$R_3 - [OE]_{0-4} - NH-CH_2CH_2OH \quad (IV),$$

dans lesquelles
$R_3$ représente un radical alkyle ou alcényle droit ou ramifié comportant 12 à 18 atomes de C,
OE est le radical de l'oxyde d'éthylène à cycle ouvert,

B) le produit de réaction d'époxydes d'alpha-oléfines comportant 12 à 18 atomes C avec de la mono- ou de la diéthanolamine,
C) le produit de réaction d'alcool oléylique ou linoléylique époxydé avec de la mono- ou de la diéthanolamine

et/ou

D) les produits de réaction des amino-alcools substitués A), B) ou C) avec de l'oxyde d'éthylène, dans des rapports molaires de 2 à 12 moles d'oxyde d'éthylène pour une mole d'aminoalcool substitué;

(5) acides carboxyliques inférieurs en quantité telle que le pH d'une solution aqueuse à 1 % en poids de la totalité du mélange se situe à peu près dans l'intervalle neutre.

**2.** Mélanges de tensioactifs selon la revendication 1, caractérisés en ce qu'au moins un des composants de mélange (1) à (4) est présent dans les plages de quantités ci-après:

1) 52 à 65 % en poids
2) 25 à 35 % en poids
3) 3 à 7 % en poids
4) A) à C) 0,1 à 1 % en poids et
4) D) 3 à 7 % en poids

sous la condition supplémentaire préférée qu'en cas d'utilisation des composants de mélange 4) A) à C), les composants de mélange (3) et/ou (4) D) soient utilisés conjointement.

**3.** Mélanges de tensioactifs selon les revendications 1 et 2, caractérisés en ce que les composants de mélange (5) sont mis en oeuvre en quantités telles que le pH d'une solution aqueuse à 1 % en poids se situe dans la plage s'étendant d'environ 6 à 7,5, des acides atoxiques appropriés, en particulier les acides acétique, glycolique, lactique et/ou citrique étant préférés comme acides carboxyliques inférieurs.

**4.** Mélanges de tensioactifs selon les revendications 1 à 3, caractérisés en ce que les éther-alcools de la formule générale II sont dérivés de fractions alcooliques dont la plage numérique de C est comprise dans l'intervalle de 8 à 18, dans laquelle la fraction de C12 à C15 représente au moins environ 75 % en poids et, de préférence, au moins environ 80 % en poids, les éther-alcools appropriés de la formule générale II, dans lesquels au moins 90 % en poids du radical alkyle $R_2$ se situent dans la plage s'étendant de 12 à 15 atomes de C, pouvant être particulièrement préférés.

**5.** Mélanges de tensioactifs selon les revendications 1 à 4, caractérisés en que les composants de mélange (1) et/ou (2) sont constitués au moins en partie d'éther-alcools, qui renferment les radicaux de l'oxyde de propylène à cycle ouvert.